# EUROPÄISCHE PATENTSCHRIFT

(11) **EP 3 578 864 B1**
(45) Veröffentlichungstag und Bekanntmachung des Hinweises auf die Patenterteilung: **09.08.2023**
(21) Anmeldenummer: 19171744.6
(22) Anmeldetag: 30.04.2019
(51) Int. Cl.: F16L 37/113, B65G 53/52, F16L 55/115

(54) **ROHRKUPPLUNG FÜR FÖRDERANLAGEN FÜR SCHÜTTGÜTER**
PIPE COUPLING FOR CONVEYOR SYSTEMS FOR BULK MATERIALS
ACCOUPLEMENT TUBULAIRE POUR INSTALLATIONS DE TRANSPORT POUR MARCHANDISES EN VRAC

(30) Priorität: 04.06.2018 DE 102018113227
(43) Veröffentlichungstag der Anmeldung: 11.12.2019
(73) Patentinhaber: Siloanlagen Achberg Holding GmbH, 88147 Achberg (DE)
(72) Erfinder: MAASS, Gerd, 88147 Achberg (DE)
(74) Vertreter: Riebling, Peter

(56) Entgegenhaltungen:
- EP-A1- 1 832 794
- EP-A1- 2 843 283
- WO-A1-2014/125199
- DE-A1- 10 006 840
- DE-U1-202005 017 732
- US-A- 2 416 829
- US-A- 6 102 444

## Beschreibung

Die Erfindung betrifft eine Rohrkupplung für Förderanlagen für Schüttgüter nach dem Oberbegriff des Patentanspruchs 1.

Eine solche Rohrkupplung ist beispielsweise mit dem Gegenstand der EP 3 293 131 A1 bekannt geworden, die allgemein eine Kupplung zur Verbindung zweier Leitungen einer Saugförderanlage miteinander sowie eine daraus gebildete Saugförderanlage schützt.

Die Erfindung ist jedoch nicht auf Saugförderanlagen nach diesem Stand der Technik beschränkt, sondern es können auch druckgestützte Förderanlagen für Schüttgüter verwendet werden.

Bei der bekannten Kupplung nach dem EP 3 293 131 A1 besteht der Nachteil, dass die Kupplung an sich relativ aufwendig aufgebaut und umständlich zu bedienen ist, denn die eigentliche luftschlüssige Kupplung wird durch einen zweiarmigen Hebel bewirkt, der an der unteren Rohrleitung schwenkbar angeordnet ist und der mit seinem hakenförmigen Ende in einer zugeordneten Hinterschneidung an der gegenüberliegenden Saugleitung einrastet.

Damit ist eine Einhandbedienung nur schwer zu verwirklichen, und es besteht im Übrigen auch beim Einführen der oberen Saugleitung in die untere Angebotsleitung das Problem, dass die beiden ineinander gesteckten Leitungen beim Einstecken gegeneinander verkanten können und möglicherweise die einander zugeordneten Dichtflächen dadurch beschädigt werden können.

Weiterer Nachteil der bekannten Anordnung ist, dass ein getrennt angeordneter, federbelastet schwenkbarer Verschlussdeckel vorgesehen werden muss, der zum Verschluss der Angebotsleitung dient, wenn die Saugleitung aus der Kupplung entfernt ist.

Damit besteht der Nachteil, dass der Deckel beim Herstellen der Kupplung mit einer Hand offengehalten werden muss, währenddessen die Saugleitung in die untere Angebotsleitung eingeführt und gekuppelt wird. Eine Einhandbedienung ist deshalb mit einer solchen Anordnung nicht möglich.

Weiterer Nachteil ist, dass der Deckel als getrenntes Teil hergestellt werden muss und mit getrennten Lagerungen an der unteren Angebotsleitung befestigt werden muss, was mit einem erhöhten Herstellungsaufwand und mit einer Verminderung der Betriebssicherheit gegeben ist.

Mit dem Gegenstand der DE 20 2013 103 855 U1 ist eine weitere Kupplung für eine Saugförderanlage bekannt geworden, bei der die Kupplung über eine Schraubhülse erfolgt, welche die beiden Kupplungsteile überbrückt und sich an dem oberen Kupplungsteil an einem radial aufwärts gerichteten Ansatz anlegt, während am unteren Kupplungsteil eine Rohrhülse befestigt ist, die ein Außengewinde trägt, auf welches die Schraubhülse aufgeschraubt wird.

Nachteil bei dieser Anordnung ist, dass keine Verschlussanordnung in der Form eines Deckels oder eine Klappe vorgesehen ist und dass die Dichtung insgesamt nicht zuverlässig arbeitet, weil sie auf das Eingreifen von gegeneinander gerichteten metallischen Dichtflächen ausgerichtet ist.

Die EP 2 843 283 A1 offenbart eine Rohrkupplung mit den Merkmalen des Oberbegriffs des Anspruchs 1.

Die DE 20 2005 017 732 U1 offenbart einen sogenannten Blindverschluss für eine Storz-Sicherheitsschnellkupplung, wobei Halteklauen als Auffangsicherung vorhanden sind.

Der Erfindung liegt die Aufgabe zugrunde, eine Rohrkupplung für Förderanlagen für Schüttgüter der eingangs genannten Art so weiterzubilden, dass eine zuverlässige Einhandbedienung der Kupplung und eine betriebssichere Handhabung der Kupplungsteile möglich ist, wobei Teile der Kupplung zudem zum Verschluss des Rohres verwendbar sein sollen..

Zur Lösung der gestellten Aufgabe ist die Erfindung durch die technische Lehre des Anspruches 1 gekennzeichnet.

Zur Einhandbedienung der Rohrkupplung besteht die Kupplungseinrichtung aus einer fest mit dem einen Rohr verbundenen Rohrhülse, die über eine Schraubverbindung mit einer am anderen Rohr drehbar angeordneten Schraubhülse verbindbar ist, und dass die Schraubhülse in einen Schraubdeckel zum Verschluss des Rohrs umwandelbar ist, der lose an der Rohrhülse befestigt ist. Eine Umwandlung der erfindungsgemäßen Schraubhülse in einen Schraubdeckel erfolgt in einfacher Weise dadurch, dass in der Schraubhülse eine zentrale Ringausnehmung angeordnet ist, in welche ein Deckelteil einrastbar oder einschnappbar ist. Das Deckelteil ist über eine Kette oder ein Band mit dem unteren Rohrteil oder der Rohrhülse verbunden.

Bei dieser Einrast- oder Einschnappverbindung zwischen der Schaubhülse und dem Deckelteil wird es bevorzugt, wenn ein gewisses radiales Spiel zwischen den Teilen vorhanden ist, so dass das in der Schraubhülse eingerastete Deckelteil in der Schraubhülse drehbar gelagert ist.

Schraubhülse und Schraubdeckel sind deshalb - mindestens vom Aussehen und der Griffgünstigkeit her - die gleichen Teile. Damit ist nicht nur eine Einhandbedienung möglich, sondern darüber hinaus auch eine Blindbedienung, denn die beiden Teile sind in gleicher Dimension und Haptik ausgebildet. Somit kann ein Benutzer auch bei ungewöhnlich eingeschränkten Sichtverhältnissen mit einer Hand die Schraubhülse in ihre Offenstellung durch eine kurze Winkeldrehung bringen und die Rohrkupplung trennen und mit der gleichen Hand den lose an der Rohrhülse hängenden Schraubdeckel ergreifen und mit der gleichen kurzen Winkeldrehung auf die nunmehr geöffnete Rohrhülse aufsetzen und diese verschließen.

Weiteres Merkmal der Erfindung ist, dass die erfindungsgemäße Rohrkupplung mit einer Schraubhülse arbeitet, die lediglich über eine einzige Winkeldrehung im Bereich von maximal 45° die Kupplungsverbindung herstellt, und weiteres Merkmal der Erfindung ist, dass nunmehr erfindungsgemäß die Schraubhülse gleichzeitig als Verschlussorgan verwendet wird, indem die Schraubhülse über einfache Maßnahmen in einen Schraubdeckel umwandelbar ist.

Mit der gegebenen technischen Lehre ergibt sich der Vorteil gegenüber der genannten EP 3 293 131 A1, dass auf einen schwenkbar gelagerten Verschlussdeckel, der mit einer Haltekonstruktion an der Rohrhülse befestigt ist, nunmehr verzichtet werden kann und stattdessen ein loser Schraubdeckel verwendet wird, der genau gleich wie die Schraubhülse der Rohrkupplung ausgebildet ist, nur dass der Schraubdeckel - ausgehend von der Grundform der Schraubhülse - nunmehr ein einrastbares Deckelteil mit einer innen liegenden abdichtenden Deckelplatte aufweist.

Damit wird das Verschlussorgan nicht mehr unmittelbar fest und schwenkbar an der Rohrhülse befestigt, wie es aus dem Stand der Technik mit dem schwenkbaren Deckel bekannt ist, sondern das Verschlussorgan kann getrennt, z. B. über eine Kette oder ein Band mit dem unteren Rohrteil verbunden sein bzw. mit der unteren am Rohrteil verbundenen Rohrhülse, wodurch dann eine einfache Einhandbedienung bei Herstellung der Kupplung gegeben ist.

Soll die Rohrkupplung hergestellt werden, werden einfach die beiden Teile ineinander gesteckt, nämlich das obere Rohrteil in das untere Rohrteil, wobei das obere Rohrteil in die mit dem unteren Rohrteil lösbar oder fest verbundene Rohrhülse abdichtend eingesteckt wird.

Damit besteht der Vorteil, dass diese Steckbewegung mit einer Hand durchgeführt werden kann, und nunmehr ist vorgesehen, dass die Schraubhülse, die drehbar auf dem oberen Rohrteil angeordnet ist, mit einer einfachen und einzigen Winkeldrehung von maximal 45° in Drehverbindung mit der unteren Schraubhülse gebracht werden kann. Es liegt demnach eine einfache Einhandbedienung vor.

Weiterer Vorteil der Erfindung ist, dass der Schraubdeckel, der als Verschlussorgan dient, nunmehr getrennt von der Rohrkupplung ist und beispielsweise nur über eine Kette oder ein Band abgehängt ist, wodurch bei der Öffnung der Rohrkupplung und beim Herausziehen des oberen Rohrteils aus der unteren Rohrhülse der lose Schraubdeckel mit einer Hand auf die untere Rohrhülse aufgesetzt und ebenfalls mit einer einfachen Schraubbewegung aufgeschraubt werden kann.

In einer ersten Ausgestaltung der Erfindung ist es vorgesehen, dass die erfindungsgemäße Schraubhülse und der aus der Schraubhülse abgeleitete Schraubdeckel als Bajonettteile ausgebildet sind, was bedeutet, dass die Schraubhülse als Bajonett-Schraubhülse und der Schraubdeckel als Bajonett-Schraubdeckel ausgebildet sind und jeweils über zugeordnete Verriegelungsausnehmungen in der Art einer Bajonett-Kupplung verfügen.

In einer Weiterbildung der Erfindung kann es jedoch auch vorgesehen sein, dass die erfindungsgemäße Schraubhülse und der unmittelbar aus der Schraubhülse abgeleitete Schraubdeckel als Gewindeschraubverbindung ausgebildet sind, was bedeutet, dass es sich um eine Gewindeschraubhülse und um einen Gewindeschraubdeckel handelt.

Der einfacheren Beschreibung wegen wird der Begriff "Schraubhülse" und "Schraubdeckel" in allgemeiner Form für beide Gewindearten verwendet, nämlich für eine Bajonett- oder Gewindeschraubverbindung.

Ein besonderer Vorteil der Erfindung ergibt sich dadurch, dass es aufgrund der Bajonett-Schraubhülse und des Bajonett-Schraubdeckels nunmehr möglich ist, am Außenumfang der Schraubhülse einen RFID-Tag anzuordnen, der bevorzugt in einem Sensorgehäuse angeordnet ist.

Das Sensorgehäuse kann werkstoffeinstückig mit der Schraubhülse ausgebildet sein, und insbesondere kann dabei auch die Schraubhülse aus einem Kunststoffteil bestehen, welches werkstoffeinstückig mit dem Sensorgehäuse verbunden ist.

In einer anderen Ausgestaltung kann es vorgesehen sein, dass die Bajonett-Schraubhülse oder die Gewinde-Schraubhülse aus einem Metallmaterial bestehen und das Sensorgehäuse selbst ebenfalls aus einem Metallmaterial oder einem Kunststoffmaterial, welches durch entsprechende Schraubklemmen oder sonstige lösbare Verbindungen mit dem Außenumfang der Schraubhülse verbunden ist.

Es ist dann weiterhin vorgesehen, dass an dem unteren Rohrteil ein dem RFID-Tag und dem dort angeordneten Sensorgehäuse gegenüberliegender Lese-Schreibkopf-Halter angeordnet ist, in dem ein Sensor angeordnet ist.

Daraus ergibt sich eine einfache kontaktlos zu überwachende Rohrkupplung, bei der die Verbindung zwischen dem oberen Rohrteil und dem unteren Rohrteil durch die dargestellte RFID-Übertragung von Signalen von dem oberen Sensorgehäuse in den unteren Lese-Schreibkopf-Halter überwacht werden kann.

Damit wird eine positionsgenaue Einrichtung der beiden Teile der Rohrkupplung gewährleistet, denn nur wenn die beiden Teile winkelgerecht zueinander fluchten, erfolgt eine kontaktlose Übertragung des Sensorsignals des RFID-Tag in den darunter liegenden Sensor, der im Lese-Schreibkopf-Halter angeordnet ist.

Wie es weiter oben beschrieben wurde, ist es bei der Einrast- oder Einschnappverbindung zwischen der Schraubhülse und dem Deckelteil bevorzugt, wenn ein gewisses radiales Spiel vorhanden ist, so dass die zum Deckelteil gehörende Deckelplatte in der Schraubhülse drehbar gelagert ist.

Damit wird ein Dichtungsverschleiß beim Aufschrauben des Schraubdeckels auf eine Stirnseitendichtung im Bereich der Stirnseite der Rohrhülse vermieden, denn beim Aufschrauben des Schraubdeckels legt sich die Deckelplatte, die selbst als Dichtplatte ausgebildet ist, auf die stirnseitige Dichtung in der Rohrhülse an und bei einer Drehung des Schraubdeckels bleibt diese Deckelplatte stehen und erbringt somit eine sofortige die stirnseitige Dichtung zu einem O-Ring, der an der Stirnseitenfläche der Rohrhülse eingearbeitet ist.

Dadurch, dass eine Relativverdrehung zwischen der abdichten Deckelplatte des Schraubdeckels und dem O-Ring im Bereich der Stirnseitenfläche der Rohrhülse vermieden wird, wird somit auch die Dichtungswirkung über eine lange Zeit aufrecht erhalten, und es kommt nicht zu einem Verschleiß des stirnseitig angeordneten O-Rings.

Um zu gewährleisten, dass der in der Stirnseitenfläche angeordnete O-Ring nicht herausfällt oder herausgedreht wird, ist es in einer Weiterbildung der Erfindung vorgesehen, dass er im Bereich einer hinterschnittenen Dichtnut angeordnet ist und nur um beispielsweise ein Übermaß von 5 bis 10 % über die Stirnseitenfläche und die Dichtnut heraussteht, so dass damit stets gewährleistet ist, dass der O-Ring nicht aus der hinterschnittenen Dichtnut herausfallen kann oder herausgedreht wird.

Es ist selbstverständlich in einer anderen Ausgestaltung der Erfindung möglich, einen solchen O-Ring auch in einer zugeordneten umlaufenden Rille einzukleben oder in anderer Weise zu befestigen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: perspektivische Ansicht einer RFID-gestützten Überwachung der Drehlage der beiden Rohrteile
- Figur 2:: die perspektivische Ansicht des oberen Rohrteils zusammen mit der zum oberen Rohrteil gehörenden Bajonett-Schraubhülse
- Figur 3:: der Schnitt durch die Anordnung nach Figur 2
- Figur 4:: die Seitenansicht der Anordnung nach Figur 1
- Figur 5:: Schnitt durch die Rohrhülse
- Figur 6:: vergrößerter Schnitt der Anordnung nach Figur 5 mit einer Darstellung der konischen Dichtnut zur Aufnahme eines O-Rings
- Figur 7:: die perspektivische Ansicht der Rohrhülse gemäß Figur 5

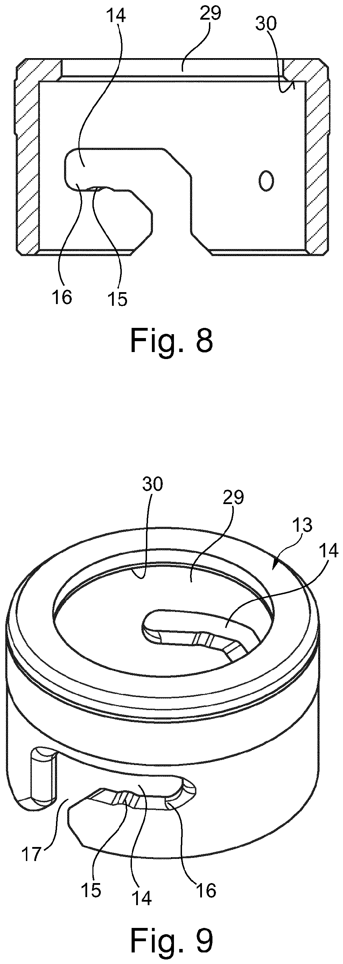

- Figur 8:: ein Schnitt durch die Bajonett-Schraubhülse
- Figur 9:: perspektivische Ansicht der Bajonett-Schraubhülse
- Figur 10:: ein Schnitt durch einen Schraubdeckel, der durch die Verwendung eines Deckelteils aus der Bajonett-Schraubhülse abgeleitet ist
- Figur 11:: die perspektivische Darstellung nach Figur 10

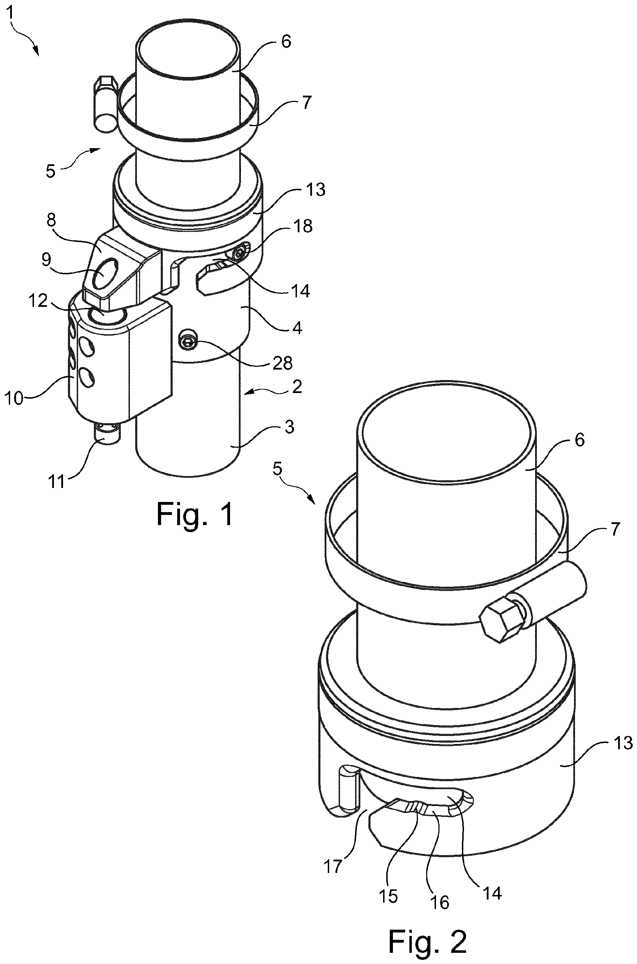

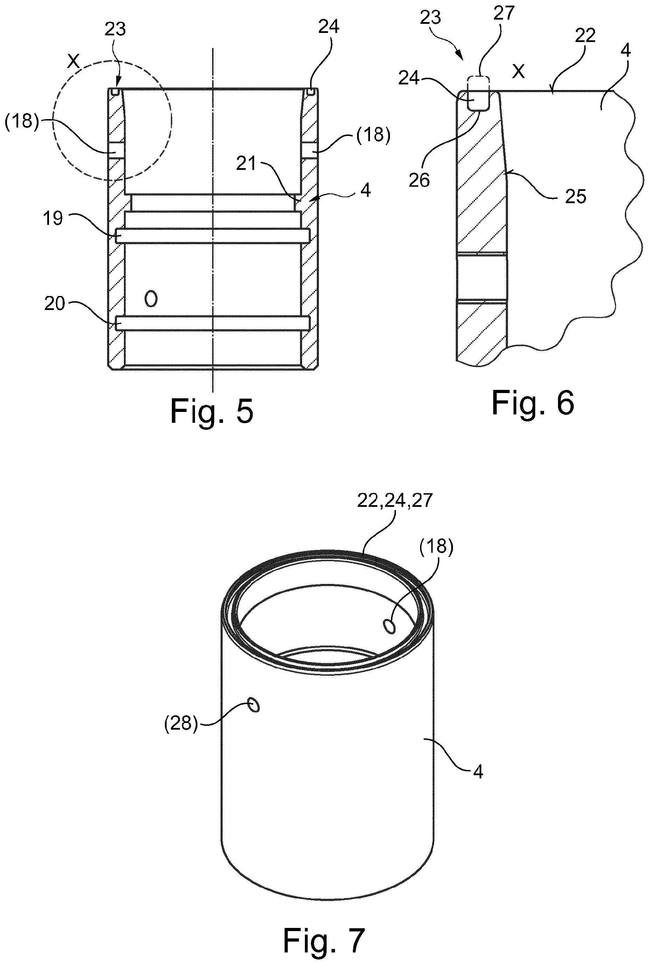

In Figur 1 ist eine Vollausstattung einer Rohrkupplung mit einer RFID-gestützten Überwachung der Drehlage der beiden einander zugeordneten Rohrteile dargestellt. Das untere Rohrteil 3 ist lösbar mit einer Rohrhülse 4 über zugeordnete Befestigungsschrauben 28 verbunden, wobei im Innenraum der Rohrhülse 4 noch zwei einander gegenüber liegende Dichtungen vorhanden sind, wobei in Figur 5 lediglich die voneinander axial beabstandeten Dichtnuten 19, 20 dargestellt sind, in welche zugeordnete O-Ringe einlegbar sind.

Das untere Rohrteil 2 zusammen mit der Rohrhülse 4 ist fest auf einem Kupplungsbahnhof angeordnet, oder es kann sich alternativ nur um ein festes Rohrstück handeln.

Das obere Rohrteil 5 der Rohrkupplung 1 wird durch ein Schlauchanschlussrohr 6 gebildet, auf dem mit einer Schlauchschelle 7 ein nicht näher dargestellter, auf das Schlauchanschlussrohr 6 aufsteckbarer flexibler Schlauch aufsteckbar ist.

Wie bereits eingangs ausgeführt, ist die Erfindung nicht auf die Art und Anordnung einer RFID-gestützten Überwachung der Verdrehlage der beiden Rohrteile 3, 6 angewiesen.

Es kann in einer anderen Ausgestaltung auch vorgesehen sein, dass die nachfolgend beschriebene RFID-Anordnung auch vollkommen entfällt.

Im gezeigten Ausführungsbeispiel handelt es sich jedoch um die Vollausstattung einer solchen Rohrkupplung mit einer RFID-gestützten Überwachung der Verdrehlage der beiden Rohrteile 3 und 5, wobei an der Schraubhülse 13, die im gezeigten Ausführungsbeispiel als Bajonett-Schraubhülse ausgebildet ist, ein Sensorgehäuse 8 befestigt ist, in der ein RFID-Tag integriert ist.

Gegenüberliegend ist an der Rohrhülse 4, die abdichtend mit dem unteren Rohrteil 3 verbunden ist, ein Lese-Schreibkopf-Halter 10 angeordnet, in dem ein Sensor 11 angeordnet ist, dessen Sensorkopf 12 den RFID-Tag 9 mit dem oberen Sensorgehäuse 8 zugeordnet ist und möglichst mit diesem fluchtet.

Ist die erforderliche Verdrehlage zwischen dem oberen Rohrteil 5 und dem unteren Rohrteil 2 erreicht, liegen sich der RFID-Tag 9 mit dem Sensor 11 genau gegenüber, und das entsprechend abgeleitete Signal beinhaltet die Meldung, dass die beiden Teile winkelgerecht miteinander gekuppelt sind.

Im gezeigten Ausführungsbeispiel ist die Schraubhülse 13 als Bajonett-Schraubhülse ausgebildet, wie eingangs schon dargestellt wurde. Damit besteht der Vorteil, dass mit einer kurzen Winkeldrehbewegung die Bajonett-Schraubhülse mit ihren beiden einander gegenüber liegenden Verriegelungsausnehmungen 14 auf zugeordnete Verriegelungsbolzen 18 aufgedreht werden kann, welche Verriegelungsbolzen 18 am Außenumfang der Rohrhülse 4 befestigt sind.

Die Figuren 2, 3 und 4 zeigen die Einzelheiten der vorher genannten Teile, wobei unter Anderem in Figur 2 erkennbar ist, dass die Verriegelungsausnehmung 14 eine untere, in axiale Richtung ausgerichtete Einführöffnung 17 ausbildet, die über eine bestimmte Einführschräge in die Verriegelungsausnehmung 14 führt, wobei im Bereich der Verriegelungsausnehmung eine Erhöhung 15 angeordnet ist, über welche der Verriegelungsbolzen 18 geführt werden muss, bevor er in einen Freiraum 16 gelangt.

Die Erhöhung 15 sorgt demnach für eine unbeabsichtigte Verdrehung der Schraubhülse 13 in Öffnungsrichtung, weil dies durch die Erhöhung 15 vermieden wird.

Die Figuren 5 bis 7 zeigen Einzelheiten der erfindungsgemäßen Rohrhülse. Diese besteht aus einem Hülsenstück, welches abdichtend auf dem unteren Rohrteil 3 aufgesteckt ist. Zu diesem Zweck weist die Rohrhülse 4 zwei axial voneinander beabstandete Dichtnuten 19, 20 auf, die mit jeweils einem nicht dargestellten O-Ring gefüllt sind, so dass das untere Rohrteil 3 über diese Dichtnuten und den dort eingelegten O-Ringen hinweg an der Unterseite eines radial im Umfang verminderten Anschlagrings 21 anschlägt.

Von der gegenüberliegenden Seite ist das obere Schlauchanschlussrohr 6 in den Innenumfang der Rohrhülse eingeführt und schlägt ebenfalls an der Oberseite des Anschlagrings 21 an.

In dargestellten Bohrungen werden die in der Zeichnung nach Figur 1 dargestellten Verriegelungsbolzen 18 eingeschraubt.

In zwei einander gegenüberliegende Befestigungsbohrungen werden auf der einen Seite eine Befestigungsschraube 28 für die Halterung einer Kette 40 eines Schraubdeckels 31 eingeschraubt, während auf der anderen Seite die Befestigungsbohrung zur Aufnahme einer Madenschraube vorgesehen ist.

Vorteilhaft ist nun, dass die Stirnseitenfläche 23 der Rohrhülse 4 eine hinterschnittene Dichtnut 24 aufweist, in der ein nicht näher dargestellter O-Ring eingebettet ist.

Der O-Ring 27 ist in Figur 6 lediglich zeichnerisch leicht angedeutet, und es soll daraus nur erkennbar sein, dass er um ein geringes axiales Maß aus der Dichtnut 24 nach oben heraussteht.

Insgesamt ist die Dichtnut 24 mit im Schnitt nach unten zum Grund sich erweiternden Konusschrägen 26 ausgerüstet, um so eine gute Lagensicherung des in der Dichtnut 24 eingebetteten O-Rings 27 zu erreichen.

In Figur 6 ist noch dargestellt, dass eine Einführschräge 25 an der Innenseite der Rohrhülse 4 im oberen Einführbereich vorhanden ist.

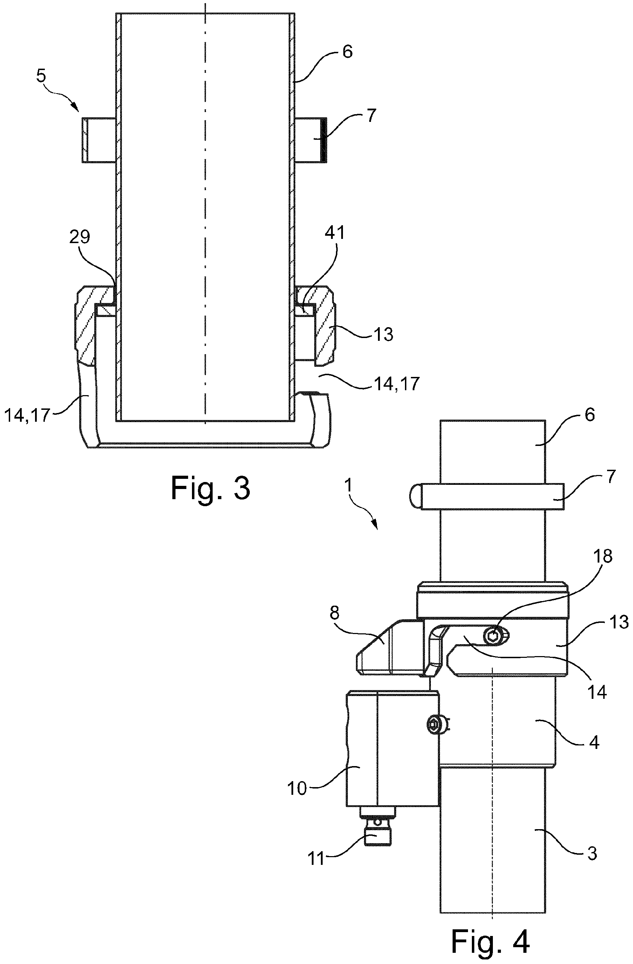

Die Anordnung eines O-Rings 27 in der Dichtnut 24 an der Stirnseite 22 der Rohrhülse 4 hat den besonderen Vorteil, dass die Herstellung der Dichtverbindung besonders einfach ist, weil gemäß Figur 3 am Außenumfang des Schlauchanschlussrohres 6 eine Ringscheibe 41 befestigt ist, die z. B. durch eine Schweißverbindung dort festgelegt ist. Statt einer Schweißverbindung können jedoch auch sämtliche anderen Verbindungen verwendet werden, wie z. B. Einrastverbindungen, Klemmverbindungen, Keilverbindungen oder Schraubverbindungen.

Vorteilhaft ist, dass die Ringscheibe 41 fest und unverschiebbar am Außenumfang des Schlauchanschlussrohrs 6 befestigt ist, so dass die Dichtverbindung besonders einfach herstellbar ist, weil das obere Schlauchanschlussrohr 6 mit seinem Rohrstück gemäß Figur 3 die Bajonett-Schraubhülse durchgreift und sich die Bajonettschraubhülse mit ihrer Ringausnehmung 29 an den Außenumfang des Schlauchanschlussrohrs 6 anlegt und die Ringscheibe 41 sich an der Unterseite des Anschlagrandes 30 der Schraubhülse 13 anlegt.

Auf diese Weise wird durch die Herstellung der Bajonett-Schraubverbindung die Ringscheibe 41 am Außenumfang des Schlauchanschlussrohres 6 gegen die Stirnseite 22 der Rohrhülse 4 gepresst, und damit wird gleichzeitig auch der in der Dichtnut 24 eingelegte O-Ring 27 verdichtet, so dass zwischen dem O-Ring und der Unterseite der Ringscheibe 41 eine zuverlässige Dichtverbindung besteht.

Nachdem der O-Ring 27 in die Dichtnut 24 zurückweicht, handelt es sich um eine kombinierte metallische Verbindung in Verbindung mit der O-Ring-Dichtung, die sich immer noch unter elastischer Verformung an die Unterseite der Ringscheibe 41 anlegt.

Hierbei wird es bevorzugt, wenn die Schraubhülse 13 als Bajonett-Schraubverbindung ausgebildet ist, denn es reicht dann eine Drehung um beispielsweise maximal 45°, um die vorher beschriebene Dichtverbindung herzustellen. Dies ist mit anderen, bekannten Dichtverbindungen nicht möglich.

Nach einem bevorzugten Merkmal der vorliegenden Erfindung ist es nunmehr vorgesehen, dass ein Schraubdeckel 31 unmittelbar aus der Konstruktion der Schraubhülse 13 abgeleitet ist und aus diesem gebildet ist.

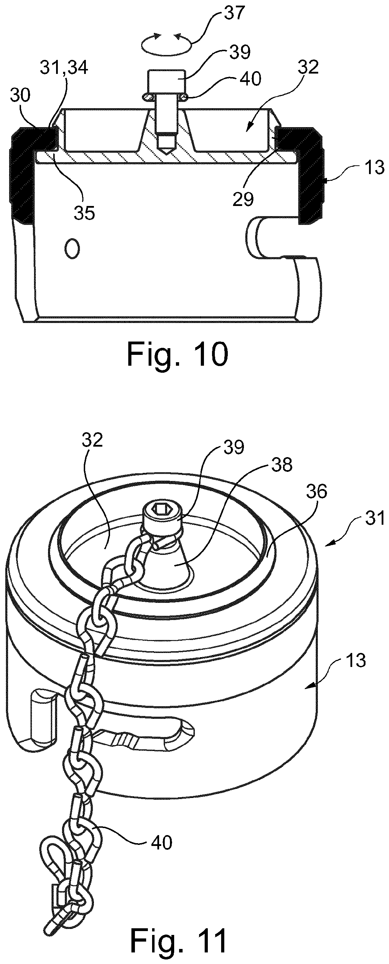

Zur Fertigungsvereinfachung reicht es deshalb aus, für eine derartige Rohrkupplung zwei derartige Schraubhülsen 13 herzustellen, wobei die eine Schraubhülse für die Herstellung der Rohrkupplung 1 selbst dient und die zweite Schraubhülse als erfindungsgemäßer Schraubdeckel 31 ausgebildet ist. Der Schraubdeckel wird also aus der Schraubhülse gebildet und gemäß Figur 10 und 11 reicht es aus, in die Ringausnehmung 29 der Schraubhülse 13 nunmehr ein Deckelteil 32 einzurasten, welches über eine Einrastverbindung 33 die Ringausnehmung 29 schließt.

Dabei wird es bevorzugt, wenn das Deckelteil 32 eine untere Deckelplatte 35 aufweist, die als Dichtfläche ausgebildet ist und z. B. aus einem leicht verformbaren Kunststoff besteht.

Die Deckelplatte 35 dient somit als Abdichtplatte für die Auflage auf die vorher beschriebene O-Ring-Dichtung im Bereich der Dichtnut 24 der Rohrhülse 4.

Von besonderem Vorteil ist, dass nach einer Weiterbildung der Erfindung vorgesehen ist, dass das Deckelteil 32 in den Pfeilrichtungen 37 drehbar in der Ringausnehmung 29 der Schraubhülse 13 gelagert ist. Damit ist es möglich, dass beim Aufschrauben des Schraubdeckels 31 der Rohrhülse 4 die Deckelplatte 35 feststeht und der äußere Hülsenteil der Schraubhülse 13 sich dreht, wodurch sichergestellt ist, dass eine Relativbewegung zwischen der Deckelplatte 35 und dem O-Ring 27 nicht stattfindet. Damit wird der O-Ring gegen Abrieb geschont, und die Lebensdauer ist wesentlich verbessert.

In einer bevorzugten Ausgestaltung ist die Einrastverbindung 33 dadurch gebildet, dass im Deckelteil 32 eine radial nach außen geöffnete Rastnut 34 vorhanden ist, die an ihrem oberen axialen Ende mit Schnapphaken 36 ausgerüstet ist.

Beim Einrasten des Deckelteils 32 legen sich somit die Schnapphaken 36 an der Oberseite des Anschlagrandes 30 der Schraubhülse 13 an und die Deckelplatte 35 legt sich mit radial auswärts gerichteten Vorsprüngen an der Unterseite des Anschlagrandes 30 der Schraubhülse an, wodurch dadurch eine feste Einrastverbindung gewährleistet ist, die jedoch mit radialem Spiel arbeitet, so dass sich das gesamte Deckelteil 32 in den Pfeilrichtungen 37 in der Schraubhülse 13 drehen kann. Im Deckelteil 32 ist noch ein Schraubenhalter 38 angeformt, der zur Aufnahme einer Befestigungsschraube 39 dient, die mit einer Kette 40 verbunden ist.

Diese Kette ist mit ihrem anderen Ende mit einer Befestigungsschraube 28 verbunden, die in Figur 1 dargestellt ist.

Auf diese Weise kann die Schraubhülse 13 sehr einfach in einen Schraubdeckel 31 umgewandelt werden, wodurch sich besondere Herstellungsvereinfachungen ergeben.

Es ist in einer ersten Ausgestaltung vorgesehen, dass die Schraubhülse 13 und der daraus konstruktiv abgeleitete Schraubdeckel 31 aus einem Metallmaterial bestehen. Hierauf ist die Erfindung nicht beschränkt. Das Material der Schraubhülse und des Schraubdeckels kann auch aus Kunststoffmaterial bestehen. Ebenso kann es vorgesehen sein, dass die Schraubhülse 13 aus einem Metallmaterial besteht, der in der Schraubhülse drehbar gehaltene Deckelteil jedoch aus einem Kunststoffteil besteht.

Mit der gegebenen technischen Lehre ergibt sich der Vorteil, dass eine besonders betriebssichere Rohrkupplung mit guten Dichteigenschaften erreicht wird, weil eine Beschädigung von Dichtungen beim Einstecken der beiden Rohrteile 3, 6 mit Sicherheit vermieden wird, nachdem in der Rohrhülse 4 axial voneinander beabstandete Dichtnuten 19, 20 mit dazugehörenden O-Ringen angeordnet sind.

Weiterer Vorteil ist die schnelle Einhandbedienbarkeit der Rohrkupplung mit einer bevorzugt als Bajonett-Schraubhülse ausgebildeten Schraubhülse und ferner einem als Bajonett-Schraubdeckel ausgebildeten Deckelteil, in welches in einfacher Einhandbedienung auf die Rohrhülse 4 dichtend aufgeschraubt werden kann, ohne dass eine Gefahr der Beschädigung der stirnseitig in der Rohrhülse 4 angeordneten Dichtung besteht.

### Zeichnungslegende

- 1: Rohrkupplung
- 2: Unteres Rohrteil (fest)
- 3: Rohrteil (unten)
- 4: Rohrhülse
- 5: Oberes Rohrteil
- 6: Schlauchanschlussrohr
- 7: Schlauchschelle
- 8: Sensorgehäuse
- 9: RFID-Tag
- 10: Lese-Schreibkopf-Halter
- 11: Sensor
- 12: Sensorkopf
- 13: Schraubhülse
- 14: Verriegelungsausnehmung
- 15: Erhöhung
- 16: Freiraum
- 17: Einfahröffnung
- 18: Verriegelungsbolzen
- 19: Dichtnut (von 4)
- 20: Dichtnut (von 4)
- 21: Anschlagring (von 4)
- 22: Stirnseite (von 4)
- 23: Stirnseitenfläche
- 24: Dichtnut
- 25: Einführschräge
- 26: Konusschräge
- 27: O-Ring
- 28: Befestigungsschraube
- 29: Ringausnehmung
- 30: Anschlagrand
- 31: Schraubdeckel
- 32: Deckelteil
- 33: Einrastverbindung
- 34: Rastnut
- 35: Deckelplatte
- 36: Schnapphaken
- 37: Drehrichtung
- 38: Schraubenhalter
- 39: Befestigungsschraube
- 40: Kette
- 41: Ringscheibe (von 6)

## Patentansprüche

1. Rohrkupplung (1) für Saug- oder Druck-Förderanlagen für Schüttgüter bestehend aus einem unteren Rohrteil (3) und einem damit luftschlüssig verbindbaren oberen Schlauchanschlussrohr (6), die über eine Kupplungseinrichtung lösbar miteinander verbindbar sind, wobei zur Einhandbedienung der Rohrkupplung die Kupplungseinrichtung aus einer fest mit dem einen Rohr (3 oder 6) verbundenen Rohrhülse (4) besteht, die über eine Schraubverbindung mit einer am anderen Rohr (6 oder 3) drehbar angeordneten Schraubhülse (13) verbindbar ist, **dadurch gekennzeichnet, dass** die Schraubhülse (13) in einen Schraubdeckel (31) zum Verschluss des Rohrs (3) umwandelbar ist, der lose an der Rohrhülse (4) befestigt ist, wobei zur Umwandlung der Schraubhülse (13) in den Schraubdeckel (31) ein scheibenförmiges Deckelteil (32) mit einer Einrastverbindung (33) in eine zentrale Ringausnehmung (29) der Schraubhülse (13) einrastbar ist, wobei das Deckelteil (32) über eine Kette oder ein Band mit dem unteren Rohrteil (3) oder der Rohrhülse (4) verbunden ist.

2. Rohrkupplung nach Anspruch 1, **dadurch gekennzeichnet, dass** eine erste, als Schraubdeckel (31) dienende Schaubhülse (13) mit Deckelteil (32) und die zweite, der Rohrverbindung dienende Schraubhülse (13) vorhanden sind, die mindestens vom Aussehen und der Griffgünstigkeit die gleichen Teile sind.

3. Rohrkupplung nach Anspruch 2, **dadurch gekennzeichnet, dass** die beiden Schraubhülsen (13) in gleicher Dimension und Haptik ausgebildet sind.

4. Rohrkupplung nach einem der Ansprüche 1 bis 3, **dadurch gekennzeichnet, dass** die Einrastverbindung (33) spielbehaftet ist, und dass das Deckelteil (32) drehbar in der Ringausnehmung (29) der Schraubhülse (13) gelagert ist.

5. Rohrkupplung nach einem der Ansprüche 1 bis 4, **dadurch gekennzeichnet, dass** die Kupplungseinrichtung und/oder der Verschluss mit dem Schraubdeckel (31) mit einer Hand bedienbar sind.

6. Rohrkupplung nach einem der Ansprüche 1 bis 5, **dadurch gekennzeichnet, dass** am Außenumfang der Schraubhülse (13) ein RFID-Tag (9) angeordnet ist und dass unteren Rohr (3) ein Lese-Schreibkopf-Halter (10) zur Auslesung des RFID-Tags (9) angeordnet ist.

7. Rohrkupplung nach einem der Ansprüche 1 bis 6, **dadurch gekennzeichnet, dass** in der Stirnseitenfläche (23) der Rohrhülse (4) eine stirnseitige Dichtnut (24) mit einem dort eingebetteten O-Ring (27) angeordnet ist, welche eine Dichtverbindung zu einem innenliegenden Anschlagrand an der Schraubhülse (13) und/oder mit der Unterseite einer Deckelplatte (35) des Schraubdeckels (31) bildet.

8. Rohrkupplung nach Anspruch 7, **dadurch gekennzeichnet, dass** zur Vermeidung von Dichtungsverschleiß beim Aufschrauben des Schraubdeckels (31) auf den stirnseitigen O-Ring (27) im Bereich der Stirnseite der Rohrhülse (4) sich die Deckelplatte (35) auf die stirnseitige Dichtung in der Rohrhülse(4) anlegt und bei einer Drehung des Schraubdeckels (31) stehen bleibt.

9. Rohrkupplung nach einem der Ansprüche 1 bis 8, **dadurch gekennzeichnet, dass** die Rohrhülse (4) aus einem Hülsenstück besteht, welches abdichtend auf dem unteren Rohrteil (3) aufgesteckt ist und dass die Rohrhülse (4) zu diesem Zweck zwei axial voneinander beabstandete Dichtnuten (19, 20) aufweist, die mit jeweils einem O-Ring gefüllt sind, und dass das untere Rohrteil (3) über die Dichtnuten (19, 20) und den dort eingelegten O-Ringen hinweg an der Unterseite eines radial im Umfang verminderten Anschlagring (21) im Innenraum der Rohrhülse (4) anschlägt.

10. Rohrkupplung nach Anspruch 9, **dadurch gekennzeichnet, dass** von der gegenüberliegenden Seite der Rohrhülse (4) das obere Schlauchanschlussrohr (6) in den Innenumfang der Rohrhülse (4) eingeführt ist und an der Oberseite des Anschlagrings (21) im Innenraum der Rohrhülse (4) anschlägt.

11. Rohrkupplung nach einem der Ansprüche 1 bis 10, **dadurch gekennzeichnet, dass** zur wahlweisen Festlegung des Schlauchanschlussrohres (6) oder des Schraubdeckels (31) in der axialen Öffnung der Schraubhülse (13) am Schlauchanschlussrohr (6) eine im Durchmesser vergrößerte Ringscheibe (41) und am Schraubdeckel (31) eine größengleiche Deckelplatte (35) angeordnet sind, die sich jeweils an einem inneren, im Durchmesser verkleinerten, stirnseitigen Anschlagrand (30) der Schraubhülse (13) anlegen.

12. Rohrkupplung nach Anspruch 11, **dadurch gekennzeichnet, dass** bei Herstellung der Schraubverbindung sich die Ringscheibe (41) am Außenumfang des Schlauchanschlussrohres (6) gegen die Stirnseite (22) der Rohrhülse (4) anpresst, und dabei den in der Dichtnut (24) eingelegte O-Ring (27) verdichtet, so dass zwischen dem O-Ring (27) und der Unterseite der Ringscheibe (41) eine zuverlässige Dichtverbindung besteht.

13. Rohrkupplung nach Anspruch 11 oder 12, **dadurch gekennzeichnet, dass** bei wahlweiser Herstellung der Dichtverbindung mit der Ringscheibe (41) oder der größengleichen Deckelplatte (35) der O-Ring (27) in die stirnseitige Dichtnut (24) der Rohrhülse (4) zurückweicht, sodass eine kombinierte metallische Verbindung in Verbindung mit dem O-Ring (27) besteht, der sich immer noch unter elastischer Verformung an die Unterseite der Ringscheibe (41) oder der Deckelplatte (35) anlegt.

14. Rohrkupplung nach einem der Ansprüche 1 bis 13, **dadurch gekennzeichnet, dass** bei der Ausbildung der Schraubhülse (13) als Blindverschluss das Deckelteil (32) des Schraubdeckels (31) eine radial nach außen geöffnete Rastnut (34) aufweist, die an ihrem oberen axialen Ende Schnapphaken (36) zur Herstellung der Rastverbindung mit der Schraubhülse (13) aufweist, die sich an der Oberseite des Anschlagrandes (30) der Schraubhülse (13) anlegen.

## Claims

1. Pipe coupling (1) for suction or pressure conveying systems for bulk goods consisting of a lower pipe part (3) and an upper hose connection pipe (6) which can be connected thereto in airtight manner, and which can be connected to one another releasably via a coupling device, wherein for single-handed operation of the pipe coupling, the coupling device consists of a pipe sleeve (4) connected firmly to the one pipe (3 or 6) which can be connected to a screw sleeve (13) arranged to be rotatable on the other pipe (6 or 3) via a screw connection, **characterised in that** the screw sleeve (13) can be converted to a screw cap (31) to close the pipe (3) and is attached loosely on the pipe sleeve (4), wherein to convert the screw sleeve (13) to the screw cap (31), a disc-like cap part (32) can be snapped into a central annular recess (29) of the screw sleeve (13) using a snap connection (33), wherein the cap part (32) is connected to the lower pipe part (3) or the pipe sleeve (4) via a chain or a ribbon.

2. Pipe coupling according to claim 1, **characterised in that** a first screw sleeve (13) serving as screw cap (31) with cap part (32) and the second screw sleeve (13) serving for pipe connection are present which are the same parts at least from appearance and favourability of grip.

3. Pipe coupling according to claim 2, **characterised in that** the two screw sleeves (13) are configured with the same dimension and haptics.

4. Pipe coupling according to one of claims 1 to 3, **characterised in that** the snap connection (33) is subject to play, and **in that** the cap part (32) is mounted to be rotatable in the annular recess (29) of the screw sleeve (13).

5. Pipe coupling according to one of claims 1 to 4, **characterised in that** the coupling device and/or the closure can be operated with one hand using the screw cap (31).

6. Pipe coupling according to one of claims 1 to 5, **characterised in that** an RFID tag (9) is arranged on the outer circumference of the screw sleeve (13) and **in that** a read-write head holder (10) to read out the RFID tag (9) is arranged on lower pipe (3).

7. Pipe coupling according to one of claims 1 to 6, **characterised in that** an end face-side sealing groove (24) with an O ring (27) embedded there, which forms a sealing connection with an inner-lying stop edge on the screw sleeve (13) and/or with the underside of a cap plate (35) of the screw cap (31), is arranged in the end-face side surface (23) of the pipe sleeve (4).

8. Pipe coupling according to claim 7, **characterised in that** to avoid seal wear when screwing the screw cap (31) onto the end face-side O ring (27) in the region of the end-face side of the pipe sleeve (4), the cap plate (35) is placed on the end face-side seal in the pipe sleeve (4) and stays when the screw cap (31) is rotated.

9. Pipe coupling according to one of claims 1 to 8, **characterised in that** the pipe sleeve (4) consists of a sleeve piece which is placed in sealing manner on the lower pipe part (3) and **in that** the pipe sleeve (4) has for this purpose two sealing grooves (19, 20) spaced from one another axially which are filled with respectively one O ring, and **in that** the lower pipe part (3) stops on the underside of a stop ring (21) reduced radially in circumference in the interior of the pipe sleeve (4) over the sealing grooves (19, 20) and the O rings inserted there.

10. Pipe coupling according to claim 9, **characterised in that** from the opposite side of the pipe sleeve (4), the upper hose connection pipe (6) is introduced into the inner circumference of the pipe sleeve (4) and stops on the upper side of the stop ring (21) in the interior of the pipe sleeve (4).

11. Pipe coupling according to one of claims 1 to 10, **characterised in that** for optional fixing of the hose connection pipe (6) or of the screw cap (31) in the axial opening of the screw sleeve (13), an annular disc (41) enlarged in diameter is arranged on the screw connection pipe (6), and the same-size cap plate (35) is arranged on the screw cap (31) and both are placed respectively on an inner, reduced- diameter, end face-side stop edge (30) of the screw sleeve (13).

12. Pipe coupling according to claim 11, **characterised in that** when establishing the screw connection, the annular disc (41) on the outer circumference of the hose connection pipe (6) is pressed against the end-face side (22) of the pipe sleeve (4), and thus compresses the O ring (27) inserted in the sealing groove (24) so that a reliable sealing connection exists between the O ring (27) and the underside of the annular disc (41).

13. Pipe coupling according to claim 11 or 12, **characterised in that** when optionally establishing the sealing connection with the annular disc (41) or the same-size cap plate (35), the O ring (27) retreats into the end face-side sealing groove (24) of the pipe sleeve (4) so that a combined metallic connection exists in conjunction with the O ring (27) which is still placed with elastic deformation on the underside of the annular disc (41) or the cap plate (35).

14. Pipe coupling according to one of claims 1 to 13, **characterised in that** when configuring the screw sleeve (13) as a blind closure, the cap part (32) of the screw cap (31) has a snap-in groove (34) opened radially outwards which has at its upper axial end, snap hooks (36) to establish the snap-in connection with the screw sleeve (13) which are placed on the upper side of the stop edge (30) of the screw sleeve (13).

## Revendications

1. Accouplement tubulaire (1) pour installations de transport par aspiration ou pression de produits en vrac, composé d'un élément tubulaire inférieur (3) et d'un tuyau supérieur de raccordement de tuyau (6) apte à être relié à celui-ci avec communication d'air, qui sont aptes à être reliés l'un à l'autre de manière amovible par un dispositif d'accouplement, dans lequel pour un maniement à une seule main de l'accouplement tubulaire, le dispositif d'accouplement se compose d'un manchon tubulaire (4) relié fixement à un tube (3 ou 6), qui est apte à être relié par une liaison filetée à un manchon fileté (13) disposé à rotation sur l'autre tube (6 ou 3), **caractérisé en ce que** le manchon fileté (13) est transformable en couvercle fileté (31) pour fermer le tube (3), qui est fixé de manière lâche au manchon tubulaire (4), dans lequel pour transformer le manchon fileté (13) en couvercle fileté (31) un élément de couvercle en forme de disque (32) est enclenchable avec une liaison à enclenchement (33) dans un creux annulaire central (29) du manchon fileté (13), dans lequel l'élément de couvercle (32) est relié par une chaîne ou une bande à l'élément tubulaire inférieur (3) ou au manchon tubulaire (4),

2. Accouplement tubulaire selon la revendication 1, **caractérisé en ce qu'**un premier manchon fileté (13) servant de couvercle fileté (31), avec un élément de couvercle (32), et le deuxième manchon fileté (13) servant d'accouplement tubulaire sont prévus, qui sont des éléments identiques au moins par l'aspect et la facilité de préhension.

3. Accouplement tubulaire selon la revendication 2, **caractérisé en ce que** les deux manchons fileté (13) sont formés avec les mêmes dimensions et la même haptique.

4. Accouplement tubulaire selon l'une des revendications 1 à 3, **caractérisé en ce que** le dispositif d'enclenchement (33) a du jeu, et **en ce que** l'élément de couvercle (32) est monté à rotation dans le creux annulaire (29) du manchon fileté (13).

5. Accouplement tubulaire selon l'une des revendications 1 à 4, **caractérisé en ce que** le dispositif d'accouplement et/ou la fermeture avec le couvercle fileté (31) sont aptes à être maniés avec une seule main.

6. Accouplement tubulaire selon l'une des revendications 1 à 5, **caractérisé en ce qu'**à la périphérie extérieure du manchon fileté (13) est disposée une étiquette RFID (9) et **en ce que** sur le tube inférieur (3) est disposé un support de tête de lecture-écriture (10) pour lire l'étiquette RFID (9).

7. Accouplement tubulaire selon l'une des revendications 1 à 6, **caractérisé en ce que** dans la surface de côté frontal (23) du manchon tubulaire (4) est disposée une rainure d'étanchéité côté frontal (24) avec un joint torique (27) encasté à cet endroit, qui forme une liaison étanche avec un bord de butée intérieur sur le manchon tubulaire (13) et/ou avec le côté inférieur d'une plaque de couvercle (35) du couvercle fileté (31).

8. Accouplement tubulaire selon la revendication 7, **caractérisé en ce que** pour éviter une usure du joint d'étanchéité lors du vissage du couvercle fileté (31) sur le joint torique côté frontal (27), la plaque de couvercle (35) s'applique sur le joint côté frontal dans le manchon tubulaire (4), dans la zone du côté frontal du manchon tubulaire (4) et s'immobilise lors d'une rotation du couvercle fileté (31).

9. Accouplement tubulaire selon l'une des revendications 1 à 8, **caractérisé en ce que** le manchon tubulaire (4) se compose d'une pièce de manchon qui est enfilée de manière étanche sur l'élément tubulaire inférieur (3) et **en ce que** le manchon tubulaire (4) comporte à cet effet deux rainures d'étanchéité (19, 20) espacées axialement l'une de l'autre qui sont remplies respectivement avec un joint torique, et **en ce que** l'élément tubulaire inférieur (3) bute, en franchissant les rainures d'étanchéité (19, 20) et les joints toriques placés à cet endroit, contre le côté inférieur d'une bague de butée (21) à circonférence réduite radialement, dans l'espace intérieur du manchon tubulaire (4).

10. Accouplement tubulaire selon la revendication 9, **caractérisé en ce que** le tube supérieur de raccordement de tuyau (6) est introduit du côté opposé du manchon tubulaire (4) dans la circonférence intérieure du manchon tubulaire (4) et bute contre le côté supérieur de la bague de butée (21) dans l'espace intérieur du manchon tubulaire (4).

11. Accouplement tubulaire selon l'une des revendications 1 à 10, **caractérisé en ce que** pour immobiliser sélectivement le tube de raccordement de tuyau (6) ou le couvercle fileté (31) dans l'ouverture axiale du manchon fileté (13), il est prévu sur le tube de raccordement de tuyau (6) une rondelle (41) à diamètre agrandi, et sur le couvercle fileté (31) une plaque de couvercle (35) de même taille, qui s'appliquent respectivement contre un bord intérieur de butée côté frontal (30), à diamètre réduit, du manchon fileté (13).

12. Accouplement tubulaire selon la revendication 11, **caractérisé en ce que** lors de la réalisation de la liaison fileté, la rondelle (41) s'applique par pression, sur la circonférence extérieure du tube de raccordement de tuyau (6), contre le côté frontal (22) du manchon tubulaire (4), en comprimant le joint torique (27) placé dans la rainure d'étanchéité (24), de sorte qu'il y ait entre le joint torique (27) et le côté inférieur de la rondelle (41) une liaison étanche sûre.

13. Accouplement tubulaire selon la revendication 11 ou 12, **caractérisé en ce que** lors de la réalisation sélective de la liaison étanche avec la rondelle (41) ou la plaque de couvercle de mêmes dimensions (35), le joint torique recule dans la rainure d'étanchéité côté frontal (24) du manchon tubulaire (4), de sorte qu'il y ait une liaison métallique combinée, en liaison avec le joint torique (27) qui s'applique toujours avec une déformation élastique contre le côté inférieur de la rondelle (41) ou de la plaque de couvercle (35).

14. Accouplement tubulaire selon l'une des revendications 1 à 13, **caractérisé en ce que** lors de la formation du manchon fileté (13) comme fermeture aveugle, l'élément de couvercle (32) du couvercle fileté (31) comporte une rainure d'enclenchement (34) ouverte radialement vers l'extérieur qui comporte à son extrémité axiale supérieure des crochets faisant ressort (36) pour réaliser la liaison par enclenchement avec le manchon fileté (13), qui s'appliquent contre le côté supérieur du bord de butée (30) du manchon fileté (13).
